# EUROPEAN PATENT APPLICATION

(11) **EP 4 245 147 A1**
(43) Date of publication of application: **20.09.2023**
(21) Application number: 22163053.6
(22) Date of filing: 18.03.2022
(51) Int. Cl.: A21D 13/31, A21D 13/44, A23P 20/10, A23P 20/12, A23P 20/20

(54) **METHOD OF MAKING A FOOD PRODUCT**

(71) Applicant: Nomad Foods Europe Limited, Feltham, Middlesex TW14 8HA (GB)
(72) Inventor: Di Ciaccio, Marina, Feltham, TW14 8HA (GB); Franzese, Tullia, Feltham, TW14 8HA (GB); Barbetta, Cristiano, Feltham, TW14 8HA (GB)
(74) Representative: Haseltine Lake Kempner LLP

(57) **Abstract**

A method of making a food product is described, the method involving a) providing a core, b) providing a batter mixture comprising an acidulant, said batter mixture having a pH in the range of from about 2.5 to about 4.5, c) disposing the batter mixture around the core to form an external batter layer, d) coating the external batter layer with breadcrumbs, and e) spray coating the breadcrumbs with an oil at a temperature of between 50 and 90 °C, wherein the oil has a melting point of less than 0 °C. Food products obtainable by this method are also described. The method described is particularly useful for providing battered and breaded stuffed pancakes.

## Description

### Background

Battered food products, such as battered stuffed pancakes, are a popular and convenient food staple that have been sold to consumers for many years. Examples of such products are traded as "Sofficini" or "Crispy pancakes". These products are typically pre-fried in oil before they are frozen and sold to the consumer, where the consumer usually oven-bakes the product at home.

However, there is an increasing demand for healthier products, containing less oil or fat. Conventional methods of pre-frying battered products, such as stuffed pancakes, unfortunately leads to an uptake of a large amounts of oil, often rendering the product greasy and less healthy to certain consumers. Deep frying in the presence of oil can lead to increased levels of peroxide in the product which is indicative of lipid oxidation, which can increase the rancidity of the product. However, any newly devised method would need to generate products that have maintained or even improved organoleptic properties compared to the current food products on the market.

Therefore, a current challenge is to develop a method to produce a healthier and fresher battered food product, but which results in a food product with good overall liking, taste, mouthfeel, consistency, and food safety.

### Summary of Invention

In a first aspect, the present invention provides a method of making a food product, comprising a) providing a core, b) providing a batter mixture comprising an acidulant, said batter mixture having a pH in the range of from about 2.5 to about 4.5, c) disposing the batter mixture around the core to form an external batter layer, d) coating the external batter layer with breadcrumbs, and e) spray coating the breadcrumbs with an oil at a temperature of between 50 and 90 °C, wherein the oil has a melting point of less than 0 °C.

In a second aspect, the present invention provides a food product producible or produced by the method of the first aspect, said food product comprising a core; and an external batter layer disposed around the core, said external batter layer comprising an acidulant; and a breadcrumb layer disposed on the external batter layer; and an oil layer (e.g., a spray-coated oil layer) disposed on the breadcrumbs, wherein the oil layer is present in an amount of less than 5 wt.% of the food product.

In a third aspect, the present invention provides a food product comprising a core; and an external batter layer disposed around the core, said external batter layer comprising an acidulant; and a breadcrumb layer disposed on the external batter layer; and an oil layer disposed on the breadcrumbs, wherein oil layer is present in an amount of less than 5 wt.% of the food product. The third aspect may be formed by the method of the first aspect.

In a fourth aspect, the present invention provides a food product comprising a core, wherein the core comprises a filling surrounded by a pancake batter layer, and an external batter layer disposed around the core, said external batter layer comprising lemon juice concentrate; and a breadcrumb layer disposed on the external batter layer; and an spray-coated sunflower oil layer disposed on the breadcrumbs, wherein the spray-coated sunflower oil layer is present in an amount of less than 5 wt.% of the food product. The fourth aspect may be formed by the method of the first aspect.

In a fifth aspect, the present invention provides a food product comprising a core; and an external batter layer disposed around the core, said external batter layer comprising an acidulant; and a breadcrumb layer disposed on the external batter layer; and an oil layer (e.g., a spray-coated oil layer) disposed on the breadcrumbs, wherein the food product comprises less than 10 wt.% of oil and/or less than 15 wt.% fat. The fifth aspect may be formed by the method of the first aspect.

In a sixth aspect, the present invention provides a food product comprising a core; and an external batter layer disposed around the core, said external batter layer comprising an acidulant; and a breadcrumb layer disposed on the external batter layer; and an oil layer (e.g., a spray-coated oil layer) disposed on the breadcrumbs, wherein the oil layer has a peroxide value of less than 7 mEq of O₂/kg, preferably less than 5 mEq of O₂/kg. The sixth aspect may be formed by the method of the first aspect.

The present invention has one or more of the following advantages over and above the prior art.

The method of the invention results in a food product that is healthier, has improved nutritional properties and is more appealing to the consumer as compared to comparative products on currently the market, but that also has improved or maintained sensory properties. The method of the present invention importantly differs from methods used to make comparative food products in the art since it avoids a pre-frying step of the external batter, e.g., prior to freezing.

Importantly and unexpectedly, despite the product of the invention being formed using a very different method as compared to comparative products on the market, the sensory experience or acceptability of the product of the invention is not compromised. In fact, sensory characteristics of the product of the invention are improved in certain aspects. For instance, the overall greasiness of the product of the invention is decreased, and the smell and taste are improved. Further, due to the decreased amount of oil used by the method of the invention, the product of the invention shows an improved nutritional profile, is healthier and less oily, with a reduction in total oil, calories and a reduction in fat, specifically unhealthy saturated fat.

The method of the invention was developed such that the resultant products had acceptable properties, including maintained or improved sensory properties and acceptable properties for long-term storage and consumer acceptability. For example, the spray-coating step of the method of the invention is selected such that the oil has an appropriate fluidity and viscosity for an optimum level of oil uptake on the surface of the product of the invention. Additionally, the product does not require a heat treatment step after spray-coating and prior to freezing. This leads to a decrease in the levels of peroxides in the oil, and, hence, in the rancidity of the oil in the spray-coated oil layer. Finally, the external batter layer comprises an acidulant such that the pH of the external batter layer is between 2.5 and 4.5. This has the important effect of maintaining the microbiological safety of the external batter layer, despite a lack of heat treatment prior to freezing, but has also been selected such that the viscosity and stability of the external batter layer is suitable for use in the process.

In some embodiments, step a) of the method of the invention comprises heating a pancake batter mixture to form a pancake batter layer, providing a filling, and folding the crepe batter layer about the filling to form a core. These steps provide an optimal stuffed pancake core, which does not leak filling and can be used battered and breaded easily.

In some embodiments, the method of the invention provides a pancake batter layer with a thickness of about 0.6 cm to about 0.8 cm. A thinner pancake batter layer is much preferred, as it improves the sensory experience and increases the ratio of filling to pancake batter layer. Unexpectedly, despite having a thinner pancake batter layer as compared to previous breaded and battered stuffed pancakes on the market, the integrity of the stuffed pancake remained intact during the process of the present invention and did not leak during manufacture or during subsequent cooking or oven-baking.

In some embodiments, the method of the invention further comprises a step f), which comprises freezing the product. This results in a frozen food product which is optimal for storage of the food product after production, transport and long-term storage of the product by the consumer.

In some embodiments, the method of the invention does not comprise heating the food product after step e) and before step f). Avoiding a heating step decreases the level of peroxides, and, hence, rancidity of the oil in the product of the invention. This may further increase the shelf life of the product of the invention.

In some embodiments, the method of the invention provides a batter mixture with a pH in the range from about 3 to 4.25, more preferably between 3.5 and 4. This pH range of the batter mixture is optimal in terms of sensory characteristics, as well as stability and viscosity of the batter mixture.

In some embodiments, acidulant used in the method of the invention comprises lemon juice concentrate, preferably from about 5 wt.% to about 6 wt.% lemon juice concentrate. The use of lemon juice concentrate leads to a more preferable texture, taste, stability and viscosity of the batter mixture as compared to other acidulants. The indicated range of lemon juice concentrate is optimal in terms of the aforementioned characteristics.

In some embodiments, the method of the invention provides a batter mixture comprising about 60 wt.% to about 70 wt.% water, about 20 wt.% to about 30 wt.% wheat flour, about 0.5 wt.% to about 1 wt.% wheat starch, and about 5 wt.% to about 6 wt.% lemon juice concentrate, and about 4.5 wt.% to 5.5 wt.% egg. This batter mixture was found to have optimal sensory characteristics and was found to be particularly suited for coating a stuffed pancake core.

In some embodiments, step e) of the method of the invention comprises spray-coating the oil at a temperature between 60 °C and 80 °C , preferably between 65 °C to 75 °C. The indicated temperature range results in the most preferable fluidity and viscosity for spray-coating of the oil.

In some embodiments, the product of the invention comprises an oil layer (e.g., a spray-coated oil layer) present in an amount of 2 wt.% to 5 wt.% of the food product, preferably in an amount of 2 wt.% to 3.5 wt.% of the food product. This amount of oil layer is most preferable in improving the nutritional profile of the food product, while maintaining the preferred sensory characteristics such as smell, taste and appearance.

In some aspects or embodiments, the product of the invention comprises less than 10 wt.% of oil and/or less than 15 wt.% fat. This provides a less greasy and healthier food product as compared to comparative food products on the market. It also leads to an improvement of the nutritional profile, e.g., a reduction of total calories and/or saturated fats.

In some aspects or embodiments, the product of the invention comprises an oil layer (e.g., a spray-coated oil layer) with a peroxide value of less than 7 mEq of O₂/kg₂, preferably less than 5 mEq of O₂/kg. Peroxide levels are a good indicator of the rancidity of the product, therefore, low peroxide levels are indicative of a food product with good shelf-life and acceptable or improved freshness.

### Brief Description of Figures

Figure 1 shows a photograph of an exemplary product made by the method of the invention. The photograph of the product is shown after freezing and oven-baking .
Figure 2 shows a photograph of a comparative product formed by dipping the product in oil before freezing. The photograph of the product is shown after freezing and oven-baking .
Figure 3 shows a photograph of a comparative product formed by spray-coating the product in oil and subsequent heat-treatment. The photograph of the product is shown after freezing and oven-baking .
Figure 4 shows the overall opinion rating of the product of the invention ("new") and a comparative previous product ("current") on a 10-point scale in consumer testing.
Figure 5 shows the purchase intent based on overall product experience of the product of the invention ("new") and a comparative previous product ("current") in consumer testing.
Figure 6 shows the performance of the product of the invention ("new") and comparative previous product ("current") in terms of meeting participants' expectations in consumer testing.
Figure 7 shows the appearance before cutting, smell and texture of the product of the invention ("new") and comparative previous product ("current") rated on a 10-point scale as determined by consumer testing.
Figure 8 shows the taste, tomato flavour, mozzarella flavour, coating flavour and aftertaste of the of the product of the invention ("new") and comparative previous product ("current") rated on a 10-point scale as determined by consumer testing.
Figure 9 shows the participants' agreement scores across several attributes, including taste, quality, and perceived freshness of the product of the invention ("new") and comparative previous product ("current") as determined by consumer testing.
Figure 10 shows the performance of the of the product of the invention ("new") and comparative previous product ("current") in terms of texture of the filling, perceived greasiness, and mouthfeel as determined by consumer testing.
Figure 11 shows the rating of the flavour profile of the product of the invention ("new") and comparative previous product ("current") as determined by consumer testing.

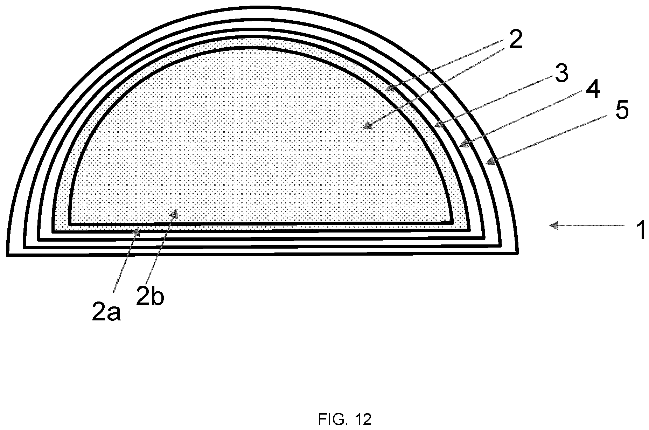

Figure 12 shows a schematic of an example food product 1 of the invention. The food product contains a core 2. In this example, the core 2 is a stuffed pancake comprising a pancake batter layer 2a and a filling 2b, and has a hemicircular shape. Disposed on the core is an external batter layer 3. Coating the external batter layer are breadcrumbs/or a breadcrumb layer 4. Disposed on the breadcrumbs is an oil layer 5 which is formed by spray-coating.

### Detailed Description

The presently-disclosed subject matter is illustrated by specific but non-limiting embodiments or examples throughout this description. Each example is provided by way of explanation of the present disclosure and is not a limitation thereon.

All combinations of method or process steps as used herein can be performed in any order, unless otherwise specified or clearly implied to the contrary by the context in which the referenced combination is made.

While the following terms used herein are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs. Although any methods, devices, and materials similar or equivalent to those described herein can be used in the practice or testing of the presently-disclosed subject matter, representative methods, and materials are described.

Following long-standing patent law convention, the terms "a", "an", and "the" refer to "one or more" when used in this application, including the claims.

As used herein, the term "about," when referring to a value or to an amount of mass, weight, time, volume, concentration or percentage is meant to encompass variations of in some embodiments ±20%, in some embodiments ±15%, in some embodiments ±10%, in some embodiments ±5%, in some embodiments ±1%, in some embodiments ±0.5%, and in some embodiments ±0.1% from the specified amount, as such variations are appropriate to perform the disclosed invention(s).

All lists of items, such as, for example, lists of components or ingredients, are intended to and should be interpreted as Markush groups. Thus, all lists can be read and interpreted as items "selected from the group consisting of' ... list of items ... "and combinations and mixtures thereof."

As used herein, the term "comprises" or "comprising" has an open meaning, which allows other, unspecified features to be present. This term embraces, but is not limited to, the semi-closed term "consisting essentially of" and the closed term "consisting of". Unless the context indicates otherwise, the term "comprises" may be replaced with either "consisting essentially of" or "consists of".

The features of any dependent claim may be readily combined with the features of any of the independent claims or other dependent claims. The features of any embodiment may also be readily combined with the features of any other embodiment, unless explicitly referred to or context dictates otherwise. It is intended that any range of component, for example, can be readily combined. It is also intended that any feature of one particular layer can be combined with a feature described for a different layer. Further, any embodiments of a method step (e.g., step a) can be combined with a embodiments of a different method step (e.g., step b, c, d or e etc.)

All percentages in the present disclosure are listed as percent by weight on the weight of the total food product, unless explicitly noted otherwise.

"Plant-based" referred to herein indicates that the product or component derives from plant and comprises no animal-derived product.

While certain suppliers may be referred to herein, these are intended only to be exemplary and it should be understood that components from other suppliers may be used.

### Method of the invention

The present invention provides a method of making a food product, comprising a) providing a core, b) providing a batter mixture comprising an acidulant, said batter mixture having a pH in the range of from about 2.5 to about 4.5, c) disposing the batter mixture around the core to form an external batter layer, d) coating the external batter layer with breadcrumbs, and e) spray coating the breadcrumbs with an oil at a temperature of between 50 and 90 °C, wherein the oil has a melting point of less than 0 °C.

### Providing a core

The method of the present invention comprises providing a core. The core may be any suitable edible material.

In some embodiments, the core comprises a solid filling. In some embodiments, the solid filling comprises a meat or fish fillet or meat or fish fillet analogue, such as chicken or fish. In some embodiments, the solid filling is cheese, e.g., mozzarella. In some embodiments, the core comprises a liquid filling, such as a sauce or a ragout. In some embodiments, the core comprises a combination of solid and liquid filling. In some embodiments, the filling comprises a solid to liquid filling in a ratio of 1:4 to 1:2.5. In some embodiments, the core comprises cheese (preferably mozzarella) and a sauce, preferably wherein the solid is cheese (mozzarella) and wherein the liquid filling is a sauce.

In preferred embodiments, the core is a stuffed pancake. This may otherwise be referred to as a "stuffed crepe", "filled crepe", "or filled pancake". The stuffed pancake comprises a filling surrounded by a pancake batter layer. In some embodiments, the filling may comprise meat, a meat analogue, cheese (e.g., hard cheese, mozzarella or a combination thereof), vegetable, fungi or any combination thereof. In some embodiments, the filling may comprise or further a liquid filling or sauce, such as a bechamel sauce or a tomato sauce. In some embodiments, the filling further comprises water. In some embodiments, the filling may further comprise an oil, for example, sunflower oil. The oil in the filling is distinct from the oil that is spray-coated in the method of the invention, which instead forms an oil layer on the surface of the breadcrumbs.

In some examples, the filling may comprise a tomato filling (e.g., a tomato sauce filling), a ham filling (e.g., a ham and bechamel sauce filling), a cheese filling (e.g., cheese and bechamel sauce) a mushroom filling, a vegetable filling (e.g., spinach and filling) or a sausage and potato filling, or a combination thereof. In some embodiments, the filling may further comprise mozzarella cheese.

In preferred embodiments, the filling comprises less than 5 wt.% oil by weight of the filling. In some embodiments, the filling is free of an oil. In some embodiments, the filling further comprises one or more of wheat starch, wheat flour, flavourings, and/or milk powder. In some embodiments, the filling further comprises up to 6 wt. % of wheat starch, in some examples, from 0.5 wt.% to 6 wt.% starch. In some embodiments, the filling further comprises up to about 5 wt.% wheat flour, in some examples, from 2.5 wt.% to 5 wt.% wheat flour. In some embodiments, the filling further comprises milk, for example, up to 7 wt.% milk powder (e.g., skimmed milk powder), and in some examples, from 1 wt.% to 6 wt.% milk powder. In some embodiments, the filling further comprises up to 10 wt.% flavourings (e.g., salt, garlic, pepper, onions, herbs such as basil, nutmeg, oregano or turmeric) . In some embodiments, the filling is vegetarian, (i.e., the filling is free of meat or fish).

In one example filling, the filling is a tomato filling which comprises preferably at least 60 wt.% tomato, more preferably about 80-90 wt.% tomato. The tomato filling may additionally comprise one or more of water, wheat starch, wheat flour, sunflower oil, cheese (e.g., up to 4 wt.% hard cheese and/or up to 15 wt.% mozzarella) and flavourings (e.g., basil, onions, salt, garlic, oregano and pepper). In some embodiments, the filling is a tomato and mozzarella filling.

In one example of a filling, the filling is a ham filling that comprises ham in an amount that is at least 25 wt.% of the filling, in some examples, the filling comprises ham in an amount from 25 wt.% to 35 wt.% of the filling. The filling may further comprise a bechamel sauce, and/or may additionally comprise one or more of water, hard cheese, skimmed milk powder, wheat starch, sunflower oil, wheat flour, fibre (e.g., oat fibre) and flavourings.

In one example of a filling, the filling is a cheese filling comprising hard cheese in an amount of at least 10 wt.%, more preferably from about 10 wt.% to 15 wt.%. The cheese filling may comprise a second cheese, for example, maasdam cheese in an amount from 2 wt. % to 7 wt.%.. The filling may further comprise a bechamel sauce and/or may additionally comprise one or more of water, milk skimmed powder, wheat starch, sunflower oil, wheat flower, salt and oat fibre.

In one example of filling, the filling is a mushroom filling comprising mushroom in an amount of at least 40 wt.%, more preferably about 40 wt.% to 65 wt.%. The mushroom filling may additionally comprise one or more of water, wheat flour, sunflower oil, milk skimmed powder, wheat starch and flavourings.

In one example of filling, the filling is a vegetable filling, and more specifically a spinach filling, wherein the vegetable filling comprises at least 40 wt.% vegetables (e.g., spinach), and more preferably about 40 wt.% to 65 wt.% vegetables (e.g., spinach). The vegetable filling may additionally comprise one or more of water, cheese (e.g., hard cheese and/or tilsiter cheese), sunflower oil, wheat flour, skimmed milk powder, wheat starch and flavourings.

In one example of filling, the filling is a sausage and potato filling, wherein the filling comprises at least 15 wt.% sausage and at least 40 wt.% potato, more preferably from 15 wt.% to 25 wt.% sausage (e.g., smoked sausage) and from 40 wt.% to 50 wt.% potato. The potato and sausage filling may additionally comprise one or more of water, ham, milk (e.g., skimmed milk powder) hard cheese, and flavorings.

The ingredients of the filling may be fixed using any suitable method. In some embodiments, the filling is cooked by heating the ingredients of the filling. In some embodiments, the ingredients are heated to a temperature of up to 90 °C, or from about 70 °C to 90 °C, or to about 80 °C. In some examples, the heating may be performed in a steam jacket. 90 °C is the optimal as a maximum temperature to avoid burns.

In some embodiments of step a), i.e., wherein the food product is a stuffed pancake, the method comprises heating a pancake batter mixture to form a pancake batter layer, providing a filling, and folding the pancake batter layer about the filling to form a stuffed pancake core. In some embodiments, the pancake batter layer is formed by heating the pancake batter mixture. In some embodiments, the pancake batter layer is formed by dosing the pancake batter mixture onto a hotplate and heating the pancake batter mixture, optionally in the presence of oil. In some embodiments, the pancake batter mixture is heated to a temperature of from about 80 °C to 100 °C. In some embodiments, the hotplate is an iron incandescent plate. In some embodiments, the pancake batter layer formed (e.g., on the hot plate) has a circular or substantially circular shape, and the pancake batter layer that is folded around the filling forms a stuffed pancake core that has a substantially hemicircular or hemicircular shape.

The pancake batter mixture and/or pancake batter layer may comprise any suitable components. In some embodiments, the pancake batter mixture and/or pancake batter layer comprises wheat flour, egg (e.g., whole egg), milk (e.g., skimmed milk powder), and optionally water, wheat starch, salt and sunflower oil. The sunflower oil in the pancake batter layer is distinct from the oil that is spray-coated in the method of the invention, which instead forms an oil coating layer on the surface of the breadcrumbs. The pancake batter mixture can be formed by mixing the ingredients together, preferably at room temperature (e.g., from about 15 °C to 25 °C). In some embodiments, the pancake batter mixture may be formed by mixing the components together, for example, in a tank. The mixing step may be performed at room temperature (e.g., at a temperature of about 15 °C to about 25 °C).

### Providing a batter mixture comprising an acidulant

In step b), the method of the invention comprises providing a batter mixture comprising an acidulant, said batter mixture having a pH in the range of from about 2.5 to about 4.5.

In some embodiments, providing the batter mixture comprises adding components of the batter mixture together and mixing the components together.

Described herein, an acidulant is any compound or component that has an acidifying effect (e.g., a compound or component that is capable of becoming deprotonated). This has the effect of lowering the pH of the batter mixture. The acidulant may otherwise be referred to as an acidifier or an acidifying agent in the art.

In some embodiments, the batter mixture has a pH in the range of 2.75 to 4.25, or from 3 to 4.25, or from 3 to 4, or from about 3.25 to 4, or from 3.25 to 3.75, or about 3.5. The pH may be as determined by pH meter. In some embodiments, the batter mixture has a pH that is less than 4.5, or a pH that is less than 4.25, or a pH that is less than 4, or a pH that is less than 3.75, or a pH that is less than or equal to 3.5. A batter mixture with a lower pH is found to reduce microbiological growth in the batter mixture and the resultant external batter layer, thereby increasing food safety and ensuring that no heat-treatment is required prior to freezing. In some embodiments, the batter mixture has a pH that is greater than 2.5, or a pH that is greater than 2.75, or a pH that is greater than 3, or a pH that is greater than 3.25. Lowering the pH was found to affect the stability and viscosity of the mixture, therefore a pH of at least 2.5 is selected. As demonstrated in the application Examples, the present inventors found that an external batter mixture with a pH of around ~ 3.5 was optimum. An external batter mixture with a pH of around 3.5 had the optimum balance between improved microbiological safety and optimum stability (i.e., with no protein degradation) and viscosity of the external batter mixture.

In preferred embodiments, the acidulant is derived from natural sources. In some embodiments, the acidulant is a fruit, plant or vegetable.

In preferred embodiments, the acidulant is a fruit juice, more preferably a citrus juice and even more preferably a lemon juice. In preferred embodiments, the acidulant is fruit juice concentrate, such as a lemon juice concentrate. In some embodiments, the lemon juice concentrate has a pH between 2 and 3, and in some examples, a pH of about 2.5. In some embodiments, the batter mixture comprises about 3 wt.% to 7.5 wt.% lemon juice concentrate, or about 4 wt.% to about 6.5 wt.% lemon juice concentrate, or about 5 wt.% to about 6 wt.% lemon juice concentrate, or about 5.5 wt.% to about 6 wt.% lemon juice concentrate. In some embodiments, the batter mixture comprises greater than 3 wt.% lemon juice concentrate, or greater than 4 wt.% lemon juice concentrate, or greater than 5 wt.% lemon juice concentrate, or greater than 5.5 wt.% lemon juice concentrate. In some embodiments, the batter mixture comprises less than 7 wt.% lemon juice concentrate, or less than 6.5 wt.% lemon juice concentrate, or less than 6 wt.% lemon juice concentrate lemon juice concentrate. The lemon juice concentrate may be obtained from commercial sources, such as Agrumaria Corleone. Importantly, the addition of lemon juice concentrate to the batter mixture did not affect the stability or composition of the batter mixture. Additionally, the addition of lemon juice was found not to alter the sensory properties of the external batter layer, including texture or taste. In some examples, the lemon juice concentrate is provided frozen. Lemon juice concentrate is from a natural origin and is therefore acceptable to the consumer and/or more environmentally friendly as compared to synthetic acidulants.

In some embodiments, the fruit juice concentrate, more preferably the lemon juice concentrate, has a brix value between 30 and 50, for example, about 40 brix.

In alternative embodiments, the acidulant may be selected from vinegar (e.g., at a pH ~3), ascorbic acid, citric acid, tartaric acid, lactic acid or malic acid.

The batter mixture (i.e., for the external batter layer) is in the form of a liquid. In some embodiments, the batter mixture comprises water, wheat flour and an acidulant. In some embodiments, the batter mixture comprises from about 20 wt.% to about 30 wt.% wheat flour, an acidulant (i.e., in an amount as described above), and a balance of water, for example, about 60 wt.% to about 70 wt.% water. In preferred embodiments, the wheat flour is type 0 wheat flour.

In some embodiments, the batter mixture further comprises wheat starch, in some examples, from 0.5 wt.% to about 1 wt.% wheat starch. In some embodiments, the batter mixture further comprises egg (e.g., pasteurised egg). In some embodiments, the batter mixture comprises up to 5.5 wt.% egg, for example, wherein the batter mixture comprises between 4.5 wt.% to 5.5. wt.% egg (e.g., pasteurised egg). The presence of egg in the batter mixture can reducing foaming during the mixing process.

In some embodiments, the batter mixture comprises
about 60 wt.% to about 70 wt.% water,
about 20 wt.% to about 30 wt.% wheat flour,
about 0.5 wt.% to about 1 wt.% wheat starch, and
about 5 wt.% to about 6 wt.% lemon juice concentrate, and
about 4.5 wt.% to 5.5 wt.% egg.

This batter mixture was found to be particularly suited for battering a stuffed pancake core to form an external batter layer.

### Disposing the batter mixture around the core

In step c) of the method of the present invention, the method comprises disposing the batter mixture around the core to form an external batter layer. The external batter layer described herein is the batter layer disposed between the core and the breadcrumbs, and may be used interchangeable with the term "batter layer". It is distinguished from the pancake batter layer described herein which instead forms part of the food product core when the core is a stuffed pancake.

In some embodiments, disposing the batter mixture around the core to form an external batter layer can be achieved by dipping the core in the batter mixture. In some embodiments, disposing the batter mixture around the core is achieved by pouring the batter mixture over the core, e.g., while the core is conveyed on a line or belt.

In some embodiments, the food product comprises 4,5 wt.% to 5,5 wt.% external batter layer, more preferably from 4.75 wt.% to 5.25 wt.%, for example, about 4.9 wt.% external batter layer.

In preferred embodiments, the external batter layer completely surrounds the core (i.e., the external batter layer surrounds 100% of the core).

The external batter layer is formed from the batter mixture. As a result, the external batter layer comprises the same components as described for the batter mixture described herein. For example, the external batter layer comprises an acidulant, preferably wherein the acidulant is lemon juice concentrate in the amounts as described herein.

### Coating the external batter layer with breadcrumbs

In step d) of the method of the present invention the method comprises coating the external batter layer with breadcrumbs. The breadcrumbs may be obtained from commercial sources, for example, from Salpa. In some embodiments, the breadcrumbs comprise wheat flour, water, yeast and flavourings (e.g., turmeric salt and paprika powder).

The breadcrumbs may have any suitable particle size distribution. In preferred embodiments, the breadcrumbs have a particle size distribution wherein at least 50% of the breadcrumbs have a particle size between 1mm and 4mm, as determined by sieve analysis.

In preferred embodiments, the breadcrumbs have a particle size distribution wherein at least 50% of the breadcrumbs have a particle size between 1.0mm and 2.8mm, as determined by sieve analysis. In some examples, at least 35% of the breadcrumbs have a particle size less than 1.7 mm and/or at least 75% of the particles have a particle size of less than 2.8mm, as determined by sieve analysis.

The breadcrumbs preferably completely surrounds the external batter layer, i.e., to form one or more breadcrumb layer. In some embodiments, the breadcrumbs have a coating coverage of at least 80% of the external batter layer, or at least 90% of the external batter layer, or at least 95% of the external batter layer, or preferably 100% of the external batter layer. In some embodiments, the breadcrumbs comprise more than one or more layer of breadcrumbs.

In some examples, the breadcrumbs (i.e., breadcrumb layer(s)) has an average (i.e., mean) thickness ranging between 0.5 to 4 mm (i.e., wherein thickness of the breadcrumb layer is determined by breadcrumb size distribution).

In some embodiments, the food product comprises from about 10 wt.% to 12.5 wt.% breadcrumbs, or from about 10.5 wt.% to 12 wt.% breadcrumbs.

### Spray-coating the breadcrumbs with oil

In step e) of the present invention, the method comprises spray coating the breadcrumbs with an oil that has a melting point of less than 0 °C.

In some embodiments, the oil has a melting point that is less than -5°C, or less than -10 °C, or less than 15 °C, or less than or equal to - 20 °C. In some embodiments, the oil has a melting point that is between -40 °C and 0°C, or between -30°C and 0 °C, or between -25 °C and 0 °C. The melting point may be as determined by ASTM D5440-17.

In some examples, the spray-coating may be performed using a spray-coating device manufactured by Costruzioni Meccaniche Industriali S.a.s. - Zampieri S.r.l., Ala (TN), Italy. The oil is preferably nebulised prior to coating on the breadcrumbs.

In the present method, the oil is spray-coated at a temperature between 50 °C to 90 °C, more preferably between 60 °C and 80°C, and more preferably between 65 °C and 75 °C, or about 70 °C. In some embodiments, the oil is spray-coated at a temperature of greater than 60 °C, or greater than 65°C. In some embodiments, the oil is spray-coated at a temperature of less than 80 °C, or less than 75 °C. It was found that heating the oil to a temperature of between 50 and 90 °C, and more preferably between 60 °C and 80 °C, guaranteed an optimum level of spray-coated oil, with a temperature of ~70 °C being most preferred. Lowering the temperature below 60 °C and/or increasing the temperature above 80°C meant that the fluidity and viscosity of the oil was affected which altered the level of oil uptake on the surface of the product.

In some embodiments, the oil is pressurised to a pressure of at least 0.3 bar, or at least 0.5 bar. In some embodiments, the oil is pressurised to a pressure of between 0.3 bar to 1.5 bar, more preferably from 0.5 to 1 bar. A pressure of between 0.5 to 1 bar provided the most optimum uptake of oil when performed on industrial-scale equipment. In preferred embodiments, the oil is pressurised using a pump comprising an invertor. This ensures consistency of pressure applied. Increasing pressure was found to have an effect on the homogenous dispersion of oil droplets.

In some embodiments, the oil is spray coated using at least one nozzle, preferably at least two nozzles wherein the two nozzles are configured to simultaneously spray-coat oil on both the top and bottom surface of the food product. In some embodiments, the nozzles are connected to spinner discs that rotate and distribute oil droplets onto the food product. The nozzle, and preferably nozzles with spinner discs, can improve the homogenous distribution of the oil.

In some embodiments, the oil is spray-coated at a flow rate of greater than 0.4 ml/s, or greater than 0.5 ml/s, or greater than 0.6 ml/s, or greater than 0.7 ml/s, or greater than or equal to 0.8 ml/s. In some embodiments, the oil is spray-coated at a flow rate of between 0.4 ml/s to 1 ml/s, more preferably from 0.6 ml/s to 1 ml/s, or from 0.7 ml/s to 0.9 ml/s, or about 0.8 ml/s. These parameters further contribute to an optimised uptake of oil. Lower flow-rates of oil were found to lead to less homogenous dispersion of oil droplets.

In some embodiments, the breadcrumbs are coated with between 2.5g and 5g of oil per 100g of food product, or between 2.75 g and 4.5 g of oil per 100g of food product, or between 3 g and 3.5 of oil per 100 g of food product.

In some embodiments, the oil is a plant-based oil. In preferred embodiments, the oil comprises at least 50% unsaturated oil or fat, preferably at least 60%, or at least 70%, or at least 80% unsaturated oil or fat. In preferred embodiments, the oil comprises less than 30% saturated oil or fat, or less than 20% saturated oil or fat. In some embodiments, the oil comprises at least 50% of oleic acid, linoleic acid or a combination thereof, preferably at least 60%, or at least 70%, or at least 80% of oleic acid, linoleic acid or a combination thereof.

In some embodiments, the oil may be selected from sunflower oil, rapeseed oil, olive oil or vegetable oil. These oils are preferred because they are healthier and low in saturated fats.

In preferred embodiments, the oil is sunflower oil. In some embodiments, the oil is sunflower oil obtained from deflaxed sunflower seed. Sunflower oils may be selected since they are low in saturated fats.

Spray-coating the breadcrumbs with the oil can result in a food product with a spray-coated oil layer disposed on the breadcrumbs. This may otherwise be described or referred to as the oil uptake layer or oil surface layer. The oil uptake (e.g., amount of oil that is coated on the surface of resultant food product formed by the method of the present invention), is found to be much less than in comparative methods involving (i) a frying or pre-frying step prior to freezing and/or (ii) dipping the product in cold oil prior to freezing. It is also understood that the degree of penetration of the spray-coated oil into the product core is very low using a spray-coating method.

In some embodiments, the spray-coated oil layer is present in an amount of less than 5 wt.% of the food product. In some embodiments, the spray-coated oil layer is present in an amount of less than 4.5 wt.% of the food product, or less than 4.25 wt.%, or less than 4 wt.%, or less than 3.75 wt.%, or less than 3.5 wt.% of the food product, or about 3.25 wt.% of the food product. In some embodiments, the spray-coated oil layer is present in an amount of 1 wt.% to 5 wt.% of the food product, or from 2 wt.% to 4.75 wt.% , or from 2.5 wt.% to 4.5 wt.%, or from 2.75 wt.% to 3.75 wt.%, or from 3 wt.% to 3.5 wt.% of the food product.

In some embodiments, the spray-coated oil layer has a peroxide value of less than 7 mEq of O₂/kg, or less than 6 mEq of O₂/kg, or less than 5 mEq of O₂/kg, or less than 4 mEq of O₂/kg. In some embodiments, the peroxide value may be determined immediately after spray-coating, or within 10 minutes after spray-coating, or within 1 hour of spray-coating. The peroxide value is found to be lower than for products formed by comparative methods wherein the oil layer on the surface of the product has been heat-treated, for example, by frying or pre-frying. This can be advantageous for improving shelf-life, decreasing rancidity and increasing freshness of the product. This also avoids any rancidity flavour. The peroxide value may be determined by iodometric endpoint determination using sox-let extraction, for example, using the method reported in the analysis report is Reg CEE 2568/1991 Annex III Reg UE 1784/2016.

In preferred embodiments, step e), (i.e., spray-coating the breadcrumbs with oil) results in a product that contains at least 40% less oil, by weight of the total product, as compared to a method where the product is fried or pre-fried in oil. In preferred embodiments, step e), (i.e., spray-coating the breadcrumbs with oil) results in a product that contains at least 70% less oil uptake as compared to a method where the product is fried or pre-fried in oil. In products according to the present invention, the spray-coated oil leads to the formation of a spray-coated oil layer on the surface of the breadcrumbs.

### Freezing and Packaging

In preferred embodiments, the method further comprises step f), after step e), which comprises freezing the product. This results in a frozen food product. The frozen food product is suitable for long-term storage.

In preferred embodiments, the method does not comprise heating the food product after step e) (i.e., spray coating the breadcrumbs with oil), and before step f) (i.e., freezing the product). In preferred embodiments, the method does not comprise heating the food product after step e) (i.e., spray coating the breadcrumbs with oil), and before step f) (i.e., freezing the product) by oven-baking, frying, or microwave radiation.

In some embodiments, the freezing occurs via forced air freezing. In some embodiments, the freezing occurs at a temperature of less than -20°C, or less than -30 °C, or about -35 °C. In some embodiments, the freezing occurs at a temperature between -20 °C and -45 °C.

In some embodiments, the method further comprises packaging the frozen food product after freezing. Once frozen, and optionally packaged, the frozen food product may be stored for up to 15 months, or up to 1 year, at a temperature below -15 °C, more preferably at- 18°C.

### Cooking

In some embodiments, the method comprises a cooking step. The cooking step occurs after step f) (i.e., freezing the product) and, if present, the packaging step

In some embodiments, the cooking step is an oven-baking step. The oven-baking step may comprise oven-baking the food product at a temperature between about 180 °C and 250 °C, more preferably at 220 °C, for about 8to 15 minutes, more preferably about 12 minutes. The oven-baking preferably takes place in a heated fan oven.

In some embodiments, the cooking step is a pan-frying step. The pan-frying step may comprise placing frying the food product in oil, (e.g., about 0.5 cm to 1.5 cm of oil) and frying for about 4 minutes to 10 minutes, preferably about 6 minutes.

In some embodiments, the cooking step is an air-frier step. The air-frier may comprise air-frying the food product in an air-frier at a temperature of about 180 °C to 220 °C, preferably about 200 °C, for about 8 minutes to 15 minutes, preferably about 12 minutes.

In alternative embodiments, the method comprises a grilling step. The grilling step also occurs after step f) (i.e., freezing the product) and, if present, the packaging step. This may involve grilling the product for a period of about 7.5 minutes to about 18 minutes, more preferably from about 10 minutes to about 15 minutes.

### Food Product

Disclosed herein is a food product comprising a core, an external batter layer disposed around the core, said external batter layer comprising an acidulant, a breadcrumb layer disposed on the external batter layer; and an oil layer (e.g., a spray-coated oil layer) disposed on the breadcrumbs.

In some embodiments, the oil layer is present in an amount of less than 5 wt.% of the food product. In some embodiments, the oil layer is present in an amount of less than 4.5 wt.% of the food product, or less than 4.25 wt.%, or less than 4 wt.%, or less than 3.75 wt.%, or less than 3.5 wt.% of the food product, or about 3.25 wt.% of the food product. In some embodiments, the oil layer is present in an amount of 1 wt.% to 5 wt.% of the food product, or from 2 wt.% to 4.75 wt.% , or from 2.5 wt.% to 4.5 wt.%, or from 2.75 wt.% to 3.75 wt.%, or from 3 wt.% to 3.5 wt.% of the food product.

In some embodiments, the oil layer has a peroxide value of less than 7 mEq of O₂/kg, or less than 6 mEq of O₂/kg, or less than 5 mEq of O₂/kg, or less than 4 mEq of O₂/kg. In some embodiments, the peroxide value may be determined immediately after coating, or within 10 minutes after coating, or within 1 hour of coating. The peroxide value is found to be lower than for products formed by comparative methods wherein the oil layer on the surface of the product has been heat-treated, for example, by frying or pre-frying. This can be advantageous for shelf-life, decreased rancidity and freshness of the product. This also avoids any rancidity flavour. The peroxide value may be determined by iodometric endpoint determination using sox-let extraction, for example, using the method reported in the analysis report Reg CEE 2568/1991 Annex III Reg UE 1784/2016.

The food product of the invention may be made by the method disclosed herein. Aspects of the core (including wherein the core is a stuffed pancake), external batter layer, breadcrumb layer, and spray-coated oil layer are as described elsewhere herein.

In some embodiments, the food product is a frozen food product. In some embodiments, the food is a manufactured food product (e.g., a mass-produced food product formed using a production line).

In some embodiments, the food product may comprise from about 65 wt.% to 85 wt.% core, or about 75 wt.% to 85 wt.% core, or about 77 wt.% to 83 wt.% core.

In preferred embodiments, the core is stuffed pancake, i.e., comprising a pancake batter layer and a filling. In such embodiments, the food product may comprise about 35 wt.% to 45 wt.% of the pancake batter layer, more preferably about 37.5 wt.% to 42.5 wt.% pancake batter layer. In some embodiments, the food product comprises about 35 wt.% to about 45 wt.% filling. In some examples, the food product comprises 29 wt.% to 33.5 wt.% sauce and from 8 wt.% to 12 wt.% cheese (e.g., mozzarella) by weight of the total product.

In some embodiments, the food product comprises 4.5 wt.% to 5.5 wt.% external batter layer, or from 4.75 wt.% to 5.25 wt.% external batter layer.

In some embodiments, the food product comprises from about 10 wt.% to 12.5 wt.% breadcrumbs, or from about 10.5 wt.% to 12 wt.%.

### Product Characteristics

The food product of the present invention may have any suitable shape. In some embodiments, (e.g., wherein the core is a stuffed pancake) the food product has a substantially hemicircular or hemicircular shape or cross-section.

In some embodiments, the core has a longest dimension of about 8 cm to 20 cm, more preferably from about 10 cm to 15 cm, or about 13 cm. In some embodiments, the core has a longest dimension of greater than 10cm, or greater than 11cm, or greater than 12cm, or greater than 12.5 cm, or greater than or equal to 13cm. In preferred embodiments, the core is a stuffed pancake.

In some embodiments, the food product has a mass of between 50g and 75g, or between 55g and 75g, or between 60 g and 65g, or about 62.5g. In some embodiments, the food product has a mass of less than 75g, or less than 70g, or less than 65g. In some embodiments, the food product has a mass of greater than 50g, or greater than 55g, or greater than 60g

In some embodiments, the food product is a stuffed pancake, and the pancake batter layer has a thickness of between about 0.6 cm to about 0.8 cm, or between about 0.65 cm to 0.75 cm, or a thickness of about 0.7 cm. In some embodiments, the pancake batter layer has a thickness of less than 0.8 cm, or less than 0.75 cm, or less than or equal to 0.7 cm. The pancake batter layer is advantageously thinner than comparative products on the market, which may contribute to an enhanced sensory performance. The thinner pancake batter layer nevertheless has retained structural integrity during manufacture and subsequent oven-baking.

### Nutritional Characteristics

In some embodiments, the products of the invention are vegetarian (i.e., are free from meat or fish). Examples include a breaded and battered stuffed pancake product comprising a tomato and mozzarella filling, a tomato filling, a cheese filling, or a spinach filling.

In preferred embodiments, the food product of the invention comprises less than 10 wt.% total oil (i.e., wherein the total oil refers to the combined amount of oil in the product, including in the filling, other layers and in the spray-coating oil layer). In some embodiments, the food product of the invention comprises less than 9 wt.%, total oil, or less than 8 wt.% total oil, and in some examples, less than 7 wt.% of total oil. In some embodiments, the food product comprises between 6 wt.% and 10 wt.% total oil, or between 6 wt.% and 8 wt.% total oil.

In preferred embodiments, the food product of the invention comprises less than 15 wt.% fat. In some embodiments, the food product of the invention comprises less than 15 wt.% fat, or less than 14 wt.% fat, or less than 13 wt.% fat, or less 12.5 wt.% fat, or less than or equal to 12 wt.% fat. In some examples, the food product of the invention comprises less than 11 wt.% fat, or less than or equal to 10.5 wt.% fat. In some embodiments, the food product comprises between 10 wt.% and 15 wt.% fat, or between 10 wt.% and 12 wt.% fat.

In preferred embodiments, the food product of the invention comprises less than 3.5 wt.% saturated fat, preferably less than 3 wt.% saturated fat.

In preferred embodiments, the food product of the invention comprises less than 300 kcal per 100 gram, or less than 275 kcal per 100 gram, or less than 250 kcal per 100 gram.

The food products formed by the method of the present invention have improved nutritional properties compared to comparative commercial products on the market, said products typically containing less total oil, less fat and less calories, while having improved or maintained product characteristics.

### Examples

### Example 1 - Exemplary method of the invention

The present example relates to a method of battering and breading a product with a stuffed pancake/stuffed crepe core.

### Step 1 - Preparing the core

*Step A* - *Providing the filling*: The stuffed pancake cores may comprise different fillings, such as tomato sauce and mozzarella, bechamel sauce and cheese or bechamel sauce and ham. Each filling sauce is prepared in a dedicated tank. Ingredients are mixed, heated through a steam jacket to over 80°C, and then cooled by a tube-in-tube exchanger with freezing water.

*Step B* - *Providing the crepe*/*pancake batter*: The pancake batter is prepared in a dedicated tank. Wheat flour, whole egg, skimmed milk powder, wheat starch, salt and sunflower oil are stirred in water at room temperature until combined.

*Step C* - *Preparing the core:* The pancake batter liquid mixture is dosed and heated on an iron incandescent hot plate at a temperature of more than 100 °C. The pancake batter is typically cooked within 5 seconds to form a cooked pancake batter layer. The filling is dosed on the cooked pancake batter layer. The pancake batter layer is then folded over about the filling and closed such that the pancake is stuffed with filling. The final core comprises a pancake batter layer disposed about a filling. The entire process takes approximately 30 seconds.

**Step 2** - **Providing the external batter and disposing around the core:** The external batter is prepared in a dedicated tank. Wheat flour, wheat starch, egg and lemon juice concentrate are added to water and mixed at room temperature. The wheat flour and wheat starch can be obtained from commercial sources, such as Grandi Molini and Sedamyl Spa. In this example, wheat flour (type 0) supplied by Grandi Molini and native wheat starch supplied by Sedamyl Spa were used. In this example, 40°brix frozen lemon juice concentrate supplied by Agrumaria Coreleone was used. The external batter is then disposed around the core, wherein the stuffed pancakes are conveyed on a belt and liquid external batter mixture is poured across the stuffed pancakes. This step can be performed using a battering machine, manufactured by MTS srl.

**Table 2: External batter composition**

| **Raw Material** | **wt.%** | **% Product** |
|---|---|---|
| Water | 60.63 | 3.01 |
| Wheat flour | 27.90 | 1.38 |
| Native wheat starch | 0.68 | 0.03 |
| Lemon juice concentrate | 5.70 | 0.25 |
| Egg (pasteurised) | 5,10 | 0.28 |
| Total | 100.00 | 4.96 |

The presence of egg is preferred in the external batter layer since this was found to prevent foaming of the batter mixture during mixing.

**Step 5** - **Breading:** After application of the external batter layer, the pancakes are breaded using breadcrumbs. The breadcrumbs can be obtained from various commercial sources. Here, the breadcrumbs were obtained from Salpa, and comprise wheat flour, water, paprika powder, turmeric salt and yeast. The breading step can be performed using a breading machine manufactured by MTS srl.

**Step 6** - **Spray coating:** The surface of the resulting battered and breaded pancake is then spray coated using 2g of sunflower oil per 62.5g pancake. Sunflower oil is a plant-based oil containing high levels of unsaturated fats and has a melting point of the sunflower oil is stored in a silo near the spray oil machine (custom built by Costruzioni Meccaniche Industriali S.a.s. - Zampieri S.r.l., Ala (TN), Italy) and heated to 70°C . The hot oil is then pumped at a pressure of 0.5 to 1 bar and conveyed to two nozzles with a flow of 0.5-0.83 ml/sec. The nozzles are placed both above and below the product sliding belt. The oil is nebulized through two rotating discs placed under the dosing nozzles. The nebulized oil coats the product with an uptake equal to 1.5g on the top surface and 0.5g on the bottom surface. The oil that is not coated on the product is recycled and goes through the cycle described above.

It was found that heating the oil to a temperature of between 50 and 90 °C, and more preferably between 60 °C and 80 °C guaranteed an optimum level of spray-coated oil, with a temperature of ~70 °C being most preferred. Lowering the temperature below 50 °C and/or increasing the temperature above 90°C meant that the fluidity and viscosity of the oil changed which altered the level of oil uptake on the surface of the product.

**Step 7** - **Freezing:** The breaded and battered pancakes are frozen by forced air using the following conditions:
Temperature -25 / - 28 °C
Freezing time 60 min
Fluid: ammonium
Gyro Freezer

**Step 8** - **Packaging:** The frozen products are packaged and stored. The products are suitable for sale to the consumer.

**Oven-baking:** The frozen battered and breaded stuffed pancakes are designed to be cooked (e.g., oven-baked, grilled, pan-fried in oil or air-fried) by the consumer at home. The oven-baking step may comprise oven-baking the food product at a temperature between about 180 °C and 220 °C for about 5 to 15 minutes, more preferably about 12 minutes.

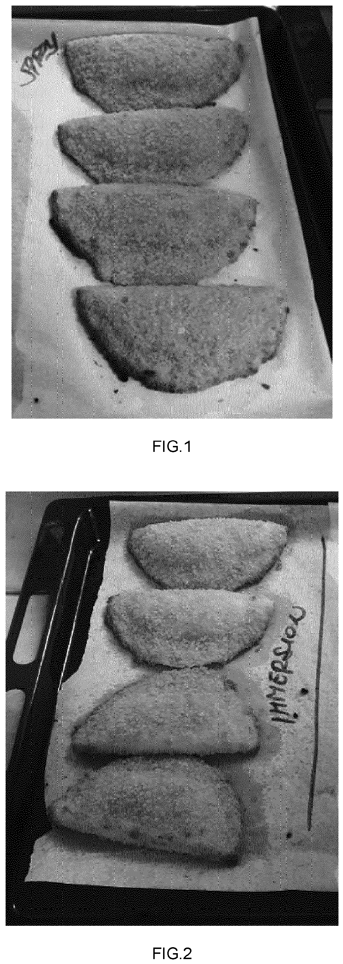

Example products made by a spray-coating oil method, after freezing and oven-baking, are shown in Figure 1.

### Example 2 - Trials of different methods of preparation and comparative examples

At the start of research and development, the present inventors sought to develop a new and improved method for producing battered and breaded stuffed pancakes, such as the commercially popular "Sofficini" or "Crispy pancakes", which were healthier and less greasy as compared to products on the market.

Several methods for preparation of the stuffed pancake were tested and compared to products on the market which are prepared by pre-frying the stuffed pancakes in oil before freezing. For the purpose of testing, the stuffed pancakes all had the same filling (mozzarella cheese and tomato sauce).

All stuffed pancake cores were prepared in the same way (see step 1 outlined in Example 1). The stuffed pancakes were then battered with a simple external batter comprising water, wheat starch and wheat flour, and breaded.

The prior method for preparation of the food product, used for the current products on the market, involves battering the stuffed pancake core in a batter comprising water, wheat flour, wheat starch, egg, breading the external batter layer and pre-frying the stuffed pancake in sunflower oil for 45 seconds at 175-180°C. Afterwards, the battered and breaded stuffed pancakes are frozen at -35°C. Finally, the battered and breaded stuffed pancakes are cooked (e.g., oven-baked) by the consumer at home (e.g., at 210 °C for 10 minutes)

### Comparative Method (A)

A first method of preparation, without a pre-frying step, involved dipping the Sofficini in cold sunflower oil for 15 seconds, followed by freezing at -35°C. The Sofficini were then oven-baked using the same conditions as for the "current" commercial products on the market. However, the Sofficini prepared by comparative method A were found to be very greasy with a lot of excess oil (Figure 2). An uptake of about 8 grams of oil on the surface of the product was measured using this method, as determined by weighing the pancake before and after the dipping step.

### Comparative Method (B)

A second comparative method (B) of preparation involved spray coating each Sofficini with 2 - 2.5 grams of sunflower oil , followed by oven-baking at 220°C for 2 minutes 30 seconds. The Sofficini were then frozen at -35°C, and finally oven-baked using the same conditions as in the previous product. This led to 2 grams of water condensate being lost from the product weight.

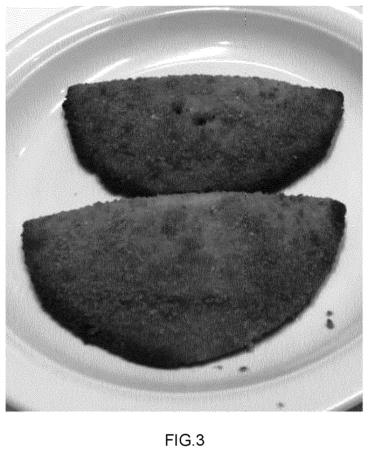

While the oil content was reduced with only 2 - 2.5 grams of oil uptake measured using this method, the texture of the product was different and unlikely to be acceptable to the consumer. Compared to the standard Sofficini currently on the market, those prepared by the method B were dryer and had burnt edges after oven-baking (Figure 3).

### Spray-coating method (C)

The third tested method (C) of preparation involved spray coating each Sofficini with 2 - 2.5 grams of sunflower oil, followed by freezing at -35°C. The frozen products could then be oven-baked using the standard method after freezing. A spray-coating temperature of about 70 °C was selected to ensure optimum oil uptake.

The Sofficini prepared by method C showed significant oil reduction as compared to the commercial product on the market, with a measured oil uptake of 2 - 2.5 grams. Unlike the standard method of making stuffed pancakes using a pre-frying step, and unlike method (B), no water condensate was measured. Most importantly, the Sofficini prepared by method C also performed well in terms of texture and taste performance after cooking. The product formed by this method also maintained good crunchiness. A more intense flavouring of the filling, less oily taste and decreased greasiness as compared to the comparative commercial Sofficini were also observed (see Figure 1).

Overall, a method comprising spray-coating the product with oil, without subsequent heat treatment (i.e., before freezing) showed the best results in terms of oil reduction and sensory characteristics.

### pH adjustment of the external batter

Since the preferred method of production without pre-frying step did not involve any heat treatment of the product before freezing, the present inventors sought to assess the food hygiene and safety of the resultant product. Bacterial growth was measured using the Hazard Analysis and Critical Control Point risk assessment following the CE Regulation 2073/2005.

A first batter mixture comprising only water, wheat starch and wheat flour was found to have unacceptable microbiological growth. The present inventors nevertheless found that microbiological growth could be prevented by adjusting the pH of the external batter layer.

Preliminarily, a similar batter was tested but with the addition of lemon juice concentrate (pH 2.5). Addition of 3 wt.% lemon juice resulted in a pH of the resultant liquid batter mixture which was about 4.5, and the pH was stable after 3 hours. The microbiological growth was substantially lowered compared to the batter mixture in the absence of lemon juice (~ pH 6.5). This was of particular importance considering that the external batter coating does not receive any heat treatment prior to freezing in the method of the present invention. A pH of 4.5 was determined be the upper limit for acceptable microbiological safety.

The inventors next tested a similar batter mixture but with the addition of 5.7% lemon juice concentrate. Here, a resulting pH of the liquid batter mix of 3.1 was measured. The measured pH was still found to be stable after two hours. Importantly, a batter mixture at this pH was found to be very successful at preventing microbiological growth. Nevertheless, addition of further lemon juice concentrate to reduce the pH of the external batter mixture, particularly to a pH of below 2.5, was found to compromise the stability (i.e., causing denaturation of certain proteins) and the viscosity of the batter mixture Further trials suggest that a pH range between 3.5 and 4 was optimum for balancing factors of microbiological safety and stability, with lower values of pH affecting the viscosity of the external batter mixture.

Notably, the addition of the lemon juice concentrate (pH 2.5) was not found to affect the sensory characteristics, texture, mix stability, viscosity and adhesion of the liquid batter when added to achieve an overall pH of the liquid batter of between 2.5 and 4.5.

### Example 3: Properties of exemplary products of the invention

### Nutritional Profiles and Ingredients of Exemplary Product

**Table 3: Recipe of the commercial comparative product ("current") and the product of the invention ("new")**

| **Raw Material** | **Current [wt.%] Commercial Comparative Product** | **New [wt.%] Product of the Invention** |
|---|---|---|
| Tomato puree | 26.792 | 26.140 |
| Sunflower oil | 13.878 | 7.572 |
| Wheat flour | 13.497 | 13.577 |
| Cheese - Mozzarella | 12.782 | 11.20 |
| Breadcrumbs | 12.660 | 11.360 |
| Water | 8.592 | 18.069 |
| Egg, pasteurised | 4.551 | 4.609 |
| Wheat starch | 2.672 | 2.647 |
| Milk - skimmed powder | 2.353 | 2.377 |
| Milk Cheese/Hard Cheese | 0.964 | 0.963 |
| Basil | 0.519 | 0.506 |
| Salt | 0.384 | 0.357 |
| Onion | 0.305 | 0.298 |
| Garlic | 0.043 | 0.042 |
| Oregano | 0.005 | 0.005 |
| Lemon juice concentrate (pH - 2.5) | 0 | 0.274 |
| Pepper - black | 0.002 | 0.003 |

The nutritional profile of the final product of the invention ("new"), which is spray-coated with oil and not pre-fried, at the time of freezing is different from that of the "current" commercial comparative product, which was pre-fried (Table 4).

**Table 4: Nutritional profile of current vs new product (tomato filling variant)**

| **Nutritional values per 100** | **Current Commercial Comparative Product** | **New Product of the Invention** |
|---|---|---|
| KJ | 1279 | 973 |
| Kcal | 306 | 232 |
| Fat [g] | 18 | 11 |
| *out of which saturated [g]* | 3.9 | 2.9 |
| Carbohydrates [g] | 27 | 25 |
| Sugar [g] | 3.5 | 3.5 |
| Fibre [g] | 1.4 | 1.2 |
| Protein [g] | 8.4 | 7.7 |
| Salt [g] | 0.91 | 0.78 |
| **Total weight [g]** | **66.5** | **62.5** |

The "new" product, formed by the methods of the invention, resulted in only 2g of sunflower oil take-up on each 62.5g pancake. This constitutes only 3.2 wt.% of oil in the oil-coating layer on the surface of the product, by weight of the total product, before freezing.

This is much improved compared to the current commercial comparative product which has an measured oil-uptake of 8g per 66.5g pancake during the frying step. This instead constitutes around 12 wt.% of the finished product before freezing. The methods of the invention surprisingly therefore lead to a 75% reduction of the sunflower oil coating layer in the new product as compared to the current comparative product on the market. Notably, the new product also contains less calories, less total oil and less fat, including less saturated fat. This is especially important because diets high in fats and oils, and saturated fats, are connected to certain health risks, such as increased blood levels of LDL cholesterol, and thereby an increased risk of heart disease and stroke. A reduction in total oil and fat was also observed for battered and breaded pancakes irrespective of the stuffed pancake fillings.

| **Tomato** | | **Ham** | **Cheese** | **Spinach** | **Mushroom** | **Potato & Sausage** |
|---|---|---|---|---|---|---|
| Sunflower oil wt.% "current" comparative product | 13.8 | 13.1 | 13.4 | 13.6 | 13.4 | 12.0 |
| Sunflower oil wt. % "new" product of the invention | 7.5 | 7.1 | 7.4 | 7.6 | 7.4 | 6.0 |
| Fat content wt.% "current" comparative product | 18 | 17 | 17 | 17 | 16 | 16 |
| Fat content "new" product of the invention | 11 | 11 | 12 | 11 | 11 | 10 |

### Dimension of products

The "new" product formed by the methods of the present invention could also be distinguished from the comparative "current" product on the market in aspects other than the nutritional values, such as the thickness, longest dimension and weight of the stuffed pancake filling (Table 5). Products of the invention were found to have a thinner pancake layer (Table 5), thereby constituting less wt.% of the finished product as compared to the comparative commercial product ("current") (Table 5), and compared to other similar products on the market. This is preferred and believed to contribute to the preferred sensory experience for the consumer, since a thinner pancake layer has a reduced starchy taste as provided by a thicker pancake layer, which in turn improves the flavour and richness provided by the filling. Unexpectedly, despite having a thinner pancake layer, the core and resultant food product still retains its structural integrity and does not break or leak either during the method according to the invention, or during subsequent cooking or oven-baking by the consumer.

**Table 5: Characteristics of the product of the invention (new), the previous product (current) for the tomato sauce and mozzarella variant**

| **Product** | **Thickness of pancake batter layer [cm]** | **wt.% pancake batter layer** | **Longest dimension of stuffed pancake [cm]** | **Filling weight [%]** |
|---|---|---|---|---|
| Current | 0.90 | 36.20 | 13 | 39.1 |
| New | 0.70 | 38.70 | 12.5 | 41.28 (comprising ~ 73:27 tomato sauce:mozzarella) |

Besides an increase in greasiness, pre-frying the stuffed pancakes, according to how the stuffed pancakes are prepared for the current commercial process, results in increased level of peroxides in the sunflower oil, which is an indicator of rancidity. Peroxide levels of sunflower oil at room temperature and sunflower oil after different heat treatment were measured and compared to those found in the previous comparative pre-fried product ("current") and the spray coated product of the invention ("new") (Table 6) by analysis of iodine value. The results of this test clearly showed decreased peroxide levels in the spray coated product of the invention. This is believed to contribute to improved shelf-life, storage, and freshness of the product.

**Table 6: Comparison of peroxide levels**

| **Sunflower** | **1h Sunflower oil at room temperature** | **Sunflower oil at 80°C for** 1h | **Sunflower oil at 175°C for 1h** | **Current Commercial Product** | **Product of the invention** | **Competitor product** |
|---|---|---|---|---|---|---|
| **[mEq of O_{2/}kg]** | 2.8 | 30.8 | 35.0 | 12.0 | 4.2 | 8.2 |

The mEq O_{2/}kg was also found to be lower in the product of the invention compared to other commercial battered and breaded stuffed pancakes on the market, indicating that these competitor products are formed by a different method to the method of the present invention.

### Example 4: Consumer testing of exemplary products of the invention

A Monadic Product Test was conducted to assess the organoleptic performance of the comparative previous stuffed pancake/crepe "Sofficini" product (current) and the stuffed pancake/crepe "Sofficini" product of the invention (new) using the key measures Purchase Intent after trial, Overall Liking and Taste. The new product was found to pass all the key measurements with at least parity scores for Appeal, Purchase Intent and Taste. To determine this, two-tailed statistical tests with 80% and 95% level of confidence (LOC) were carried out.

### Participants were recruited based on the following criteria

Monadic CLT Methodology: n=338 total consumers split across 2 cells
Italian consumers were recruited to assess one stuffed pancakes "Sofficini" in a branded CLT test in Milan
• Aged 18-65 years
• All "Sofficini" Findus buyers
• Must have previously purchased "current" Tomato & Mozzarella Sofficini

| | |
|---|---|
| Male | 30% |
| Female | 70% |
| 18-34 | 23% |
| 35-44 | 25% |
| 45-54 | 27% |
| 55-65 | 25% |
| Child 6-16 in HH | 50% |
| No child 6-16 in HH | 50% |

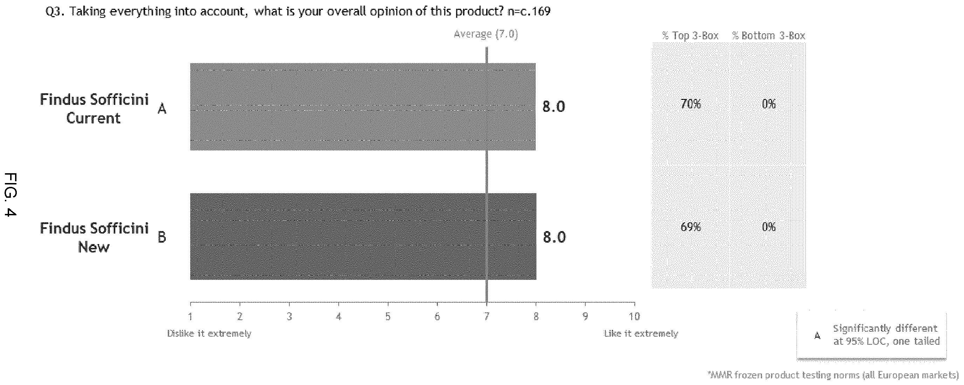

Participants were asked for their overall opinion on the "new" product of the invention, (Figure 4) versus the "current" comparative product currently on the market. They were asked to score the products on a scale of 1-10, with 1 equivalent to disliking the product extremely, and 10 equivalent to liking the product extremely (Figure 4). In terms of overall liking, the new product of the invention performs at parity with the comparative "current" product, achieving a strong mean score of 8.0 (/10) which is well above the average database score (Figure 4). The database score was on average 7.0 (/10) and was based on frozen product testing norms (snacks and family fun meals, frozen segment) in all European markets.

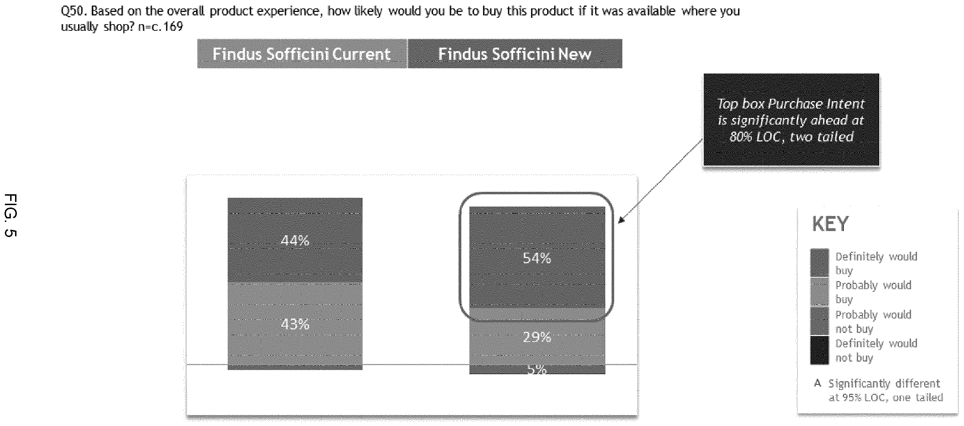

The participants were next asked how likely they would be to buy this product if it was available where they shop, based on the overall product (Figure 5). Participants could choose between the following four answers: *Definitely would not buy, probably would not buy, probably would buy, and definitely would buy* (Figure 5). The product of the present invention showed strong appeal scores translating to a high purchase intention (Figure 5). In fact, 54% of participants indicated that they would definitely buy the "new" product of the invention, as compared to 44% of participants who indicated that they would definitely buy the comparative "current" product on the market (Figure 5). This provides further evidence that the product of the present invention has improved or maintained sensory characteristics as compared to the comparative "current" product, while providing an overall healthier product.

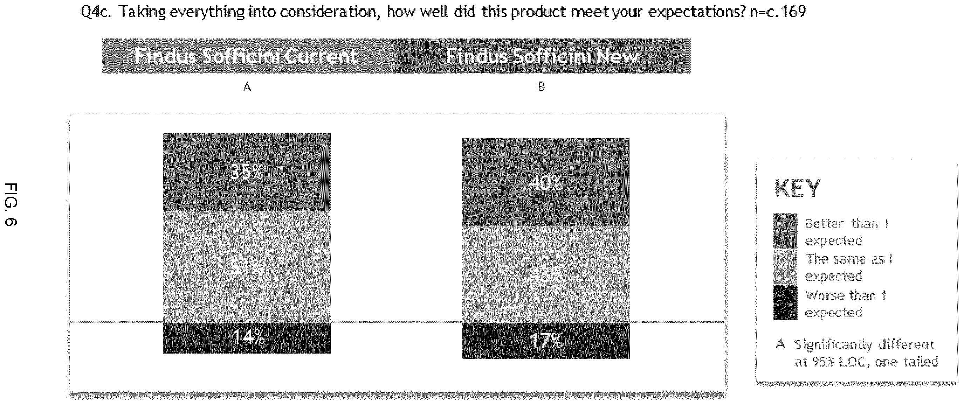

When asked how well the "new" product of the invention met the expectations, 40% of the participants indicated that the "new" product was better than they expected (Figure 6). Very few participants were left disappointed by the product of the invention (Figure 6).

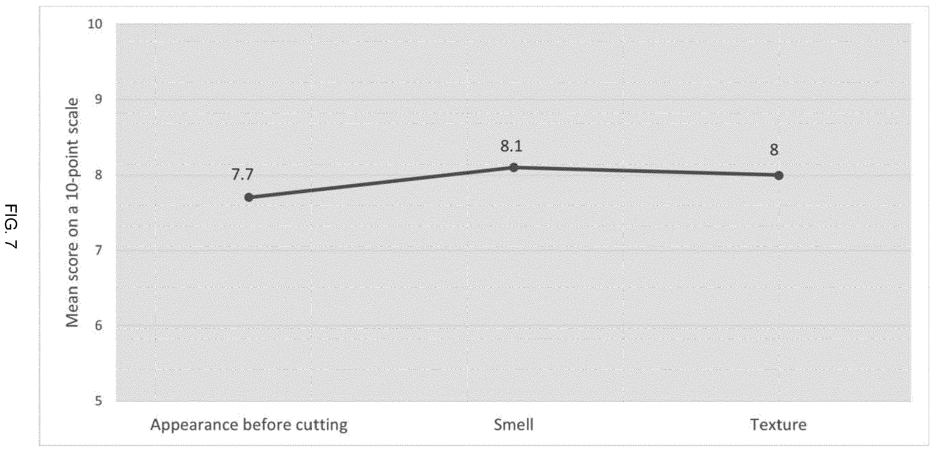

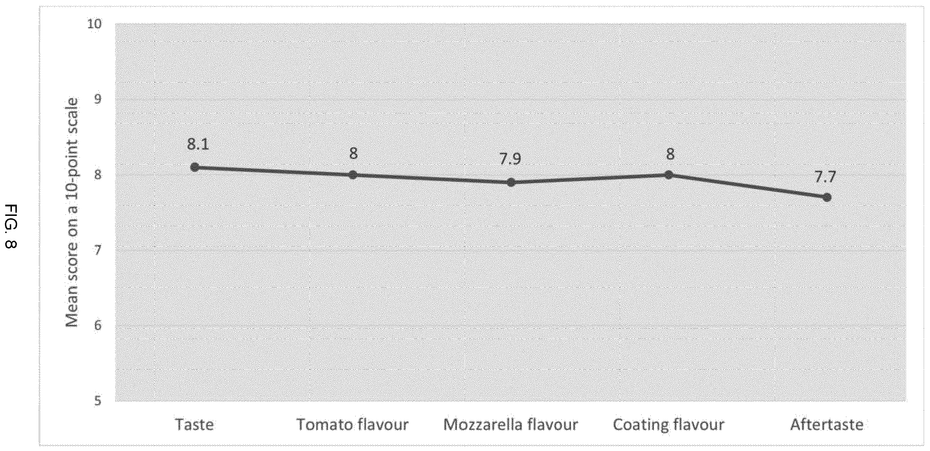

The "new" product of the invention was also found to achieve good scores in terms of appearance, aroma and texture attributes, scoring around 8 out 10 on a 10-point scale (Figure 7). Equally, the "new" product of the invention was well liked across taste measures, such as overall taste, tomato flavour, mozzarella flavour, coating flavour and aftertaste, scoring around 8 out of 10 on a 10-point scale for each of these measures (Figure 8).

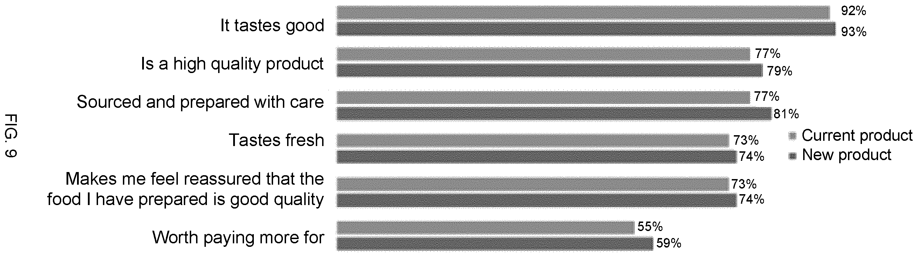

Importantly and unexpectedly, products formed by the method of the present invention did not change the "good taste" that the consumers expect from the product, as 93% of participants indicated that the product tastes good, (Figure 9). Further, while both the "new" product and comparative "current" product achieved high agreement scores across several attributes (Figure 9), the results suggest that products of the present invention were also improved or enhanced compared to the comparative "current" product. For instance, 79% of participants found that the new product of the invention is a high-quality product compared to 77% percent of participants for the "current" comparative product (Figure 9). Notably, 81% of participants considered that the "new" product of the invention is sourced and prepared with care as compared to 77% for the "current" comparative product (Figure 9). 74% of participants indicated that the product tastes fresh, and that it makes them feel reassured that the food they have prepared is good quality (Figure 9). Surprisingly more participants found that the "new" product of the invention is worth paying more for, with 59% agreeing as compared to 55% for the comparative "current" product (Figure 9). This suggests that consumers are more likely to buy and willing to pay a higher price for the "new" product of the invention as compared to the "current" commercial product on the market. The above results also indicate that the "new" product of the invention is perceived as a product of overall higher quality.

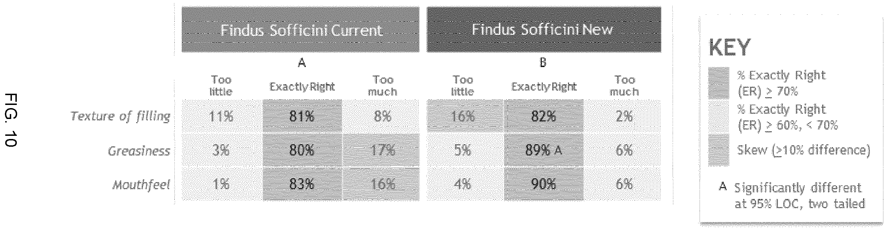

Furthermore, when asked about the texture of the filling, around 80% of participants found that the texture of both the "new" product of the invention and the comparative "current" product was exactly right (Figure 10). However, the "new" product of the invention clearly outperformed the comparative current product in terms of perceived greasiness and mouthfeel (Figure 10). Specifically, 89% of participants rated the greasiness of the "new" product of the invention exactly right as compared to only 80% for the comparative "current" product, and 90% of participants rated the mouthfeel of the "new" product of the invention exactly right as compared to only 83% for the "comparative" current product (Figure 10). This suggests that in addition to clear health benefits, the sensory performance of the products of the present invention are also improved over products on the market.

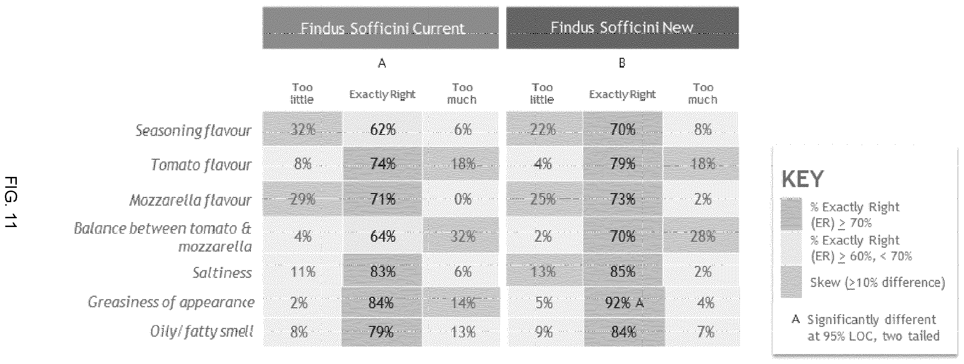

The strong flavour performance of the new product is also reflected in the results illustrated by Figure 11. Importantly, the "new" product formed by the method of the invention was rated better in terms of greasiness and oily fatty smell than the comparative current product (Figure 11).

Overall, the new product of the invention was either equivalent or showed sensory improvements as compared to the comparative current product, despite also providing a product that is healthier for the consumer. The new product of the invention was found to be greatly improved in terms of greasiness (both in texture and appearance) and mouthfeel as compared to current products on the market.

### Example 5: Effect of breadcrumb particle size distribution on sensory experience

The present inventors sought to determine whether the sensory experience of the consumer was altered by changing the breadcrumbs used for the coating layer.

Two breadcrumb particle size distributions were tested in the method of the invention. The first ("breadcrumbs 1") were smaller in size, with at least 40% of particles having a particle size of less than 1.7 mm as determined by sieve analysis, and at least 10% of particles having a particle size of less than 0.71 mm. The second breadcrumbs tested ("breadcrumbs 2") had a much larger particle size. Instead, at least 38 % of particles having a particle size of at least 2.8mm, with less than 3% of particles having a particle size of less than 0.71 mm.

Both sizes of breadcrumbs could be used to obtain a resultant product with a satisfactory crunchy mouthfeel. However, the smaller breadcrumbs "Breadcrumbs 1" were preferred for inclusion in the final product because these more effectively covered the stuffed pancake, especially on the bottom layer.

**Table 7: Breadcrumb particle size distribution**

| Particie size range [mm] | Breadcrumbs 1 [%] | Breadcrumbs 2 [%] |
|---|---|---|
| >5.60 | 0.00 | 0.00 |
| 4.00 - 5.60 | 0.00 | 0.00 |
| >4.00 | 0.00 | Maximum 10.50 |
| 2.80 - 4.00 | 6.00 -15.00 | 38.00 - 55.00 |
| 1.70-2.80 | 31.00 - 41.00 | 35.00 - 55.00 |
| 1.00-1.70 | 22.00 - 32.00 | 2.00 - 15.00 |
| 0.71 - 1.00 | 9.00 - 16.00 | 0.10 - 5.00 |
| 0.25 - 0.71 | 10.00-18.00 | 0.10 - 3.00 |
| 0.00 - 0.25 | Maximum 3.00 | Maximum 2.00 |

### Conclusion

The inventors have developed a battered and breaded stuffed pancake that is healthier and more appealing to the consumer compared to equivalent products on the market. Notably, the method of the invention does not involve a pre-frying step of the external batter prior to freezing. However, in development, it was found that several modifications to the previous method of producing said the battered and breaded stuffed pancake were required so as to not compromise the sensory experience, or acceptability, of the resultant product. First, the present inventors had to optimise the temperature of the oil in the spray-coating step such that the oil had an appropriate fluidity or viscosity for an optimum level of oil uptake on the surface of the product. A temperature of between 50 to 90 °C was found to be suitable, with a temperature between 60 °C and 80 °C being most preferred. Next, while a method of spray-coating the external batter and breadcrumbs with oil provided a product that had acceptable consumer characteristics, the inventors found that the food safety of the product was potentially compromised without a pre-frying or heat treatment step. This problem could not simply be solved by using alternative heat methods after spraying, since this instead lead to a product with unacceptable sensory characteristics (see comparative method B). Instead, it was found that this problem could be circumvented by the addition of specific amounts of acidulant, such as lemon juice concentrate, to lower the pH of the external batter to between 2.5 and 4.5, and preferably to ~ 3.5. This was found to prevent microbiological growth meaning a heat-treatment step prior to freezing was not required, while ensuring optimum stability and viscosity of the external batter layer. The addition of lemon juice concentrate importantly did not alter the stability of the external batter mixture or the organoleptic properties of the resultant product.

Analysis of the nutritional profile of the product of the invention and the comparative Sofficini stuffed pancake currently on the market also confirms that the methods and resultant products of the invention provide a healthier and less oily food product, with a significant decrease of oil, a reduction in calories and a reduction in fat, specifically unhealthy saturated fat.

Despite the method of the present invention being completely modified as compared to the deep-frying methods used for previous battered and breaded stuffed pancake "Sofficini" products, consumer testing showed that the product of the invention is also improved over the products of the market in terms of taste, smell, mouthfeel and greasiness. Even more unexpectantly, consumers indicated they would be more likely to buy the products of the invention as compared to the battered and breaded "Sofficini" stuffed pancakes, currently on the market (see Figure 5).

Other sensory attributes including taste, texture and appearance had scores in consumer testing that were also found to be similar to, or maintained, as compared to the comparative Sofficini currently on the market (see e.g., Figure 7).

## Claims

1. A method of making a food product, comprising
a. providing a core
b. providing a batter mixture comprising an acidulant, said batter mixture having a pH in the range of from about 2.5 to about 4.5,
c. disposing the batter mixture around the core to form an external batter layer,
d. coating the external batter layer with breadcrumbs, and
e. spray coating the breadcrumbs with an oil at a temperature of between 50 and 90 °C, wherein the oil has a melting point of less than 0 °C.

2. The method of claim 1, wherein the core is a stuffed pancake comprising a filling surrounded by a pancake batter layer.

3. The method of claim 2, wherein the method in step a) comprises heating a pancake batter mixture to form a pancake batter layer, providing a filling, and folding the crepe batter layer about the filling to form a core.

4. The method according to claim 2 or claim 3, wherein the pancake batter layer has a thickness of about 0.6 cm to about 0.8 cm.

5. The method of any preceding claim, further comprising step f), which comprises freezing the product.

6. The method of claim 5, wherein the method does not comprise heating the food product after step e) and before step f).

7. The method of any preceding claim, wherein the batter mixture has a pH in the range from about 3 to 4.25.

8. The method of any preceding claim, wherein the acidulant comprises lemon juice concentrate, preferably from about 5 wt.% to about 6 wt.% lemon juice concentrate.

9. The method of any preceding claim, wherein the batter mixture comprises
about 60 wt.% to about 70 wt.% water,
about 20 wt.% to about 30 wt.% wheat flour,
about 0.5 wt.% to about 1 wt.% wheat starch, and
about 5 wt.% to about 6 wt.% lemon juice concentrate, and
about 4.5 wt.% to 5.5 wt.% egg.

10. The method according to any preceding claim, wherein in step e), the oil is spray-coated at a temperature between 60 °C to 80 °C, and more preferably at a temperature between 65 °C to 75 °C.

11. The method according to any preceding claim, wherein the oil is sunflower oil.

12. A food product producible by the method of any one of claims 1-11, comprising
a core; and
an external batter layer disposed around the core, said external batter layer comprising an acidulant; and
a breadcrumb layer disposed on the external batter layer; and
an oil layer disposed on the breadcrumbs, wherein the oil layer is present in an amount of less than 5 wt.% of the food product.

13. The food product according to claim 12, wherein the oil layer is present in an amount of 2 wt.% to 5 wt.% of the food product, preferably in an amount of 2 wt.% to 3.5 wt.% of the food product.

14. The food product according to any one of claims 12-13 wherein the food product comprises less than 10 wt.% of oil and/or less than 15 wt.% fat.

15. The food product according to any one of claims 12-14, wherein the oil layer has a peroxide value of less than 7 mEq of O₂/kg, preferably less than 5 mEq of O₂/kg
